# EUROPÄISCHE PATENTSCHRIFT

(11) **EP 0 980 710 B1**
(45) Veröffentlichungstag und Bekanntmachung des Hinweises auf die Patenterteilung: **02.10.2002**
(21) Anmeldenummer: 99115739.7
(22) Anmeldetag: 10.08.1999
(51) Int. Cl.: B01J 37/02

(54) **Verfahren zum Beschichten der Strömungskanäle eines monolithischen Katalysatortragkörpers mit einer Beschichtungsdispersion**
Method for coating the channels of a monolithic catalyst body with a coating dispersion
Procédé pour revêtir les canaux d'un corps catalytique monolithique à l'aide d'une suspension de revêtement

(30) Priorität: 20.08.1998 DE 19837731
(43) Veröffentlichungstag der Anmeldung: 23.02.2000
(73) Patentinhaber: OMG AG & Co. KG, 63457 Hanau (DE)
(72) Erfinder: Foerster, Martin, Dr., 63654 Büdingen (DE); Piroth, Josef, 63875 Mespelbrunn (DE); Schlachter, Ulrich, Dr., 60385 Frankfurt (DE); Domesle, Rainer, Dr., 63755 Alzenau-Kälberau (DE); Krampe, Willi, Dr., 63165 Mühlheim/Main (DE)
(74) Vertreter: Stellbrink, Axel

(56) Entgegenhaltungen:
- WO-A-97/48500
- US-A- 3 948 213
- US-A- 4 208 454
- US-A- 5 070 893
- US-A- 5 165 970
- PATENT ABSTRACTS OF JAPAN vol. 009, no. 052 (C-269), 6. März 1985 (1985-03-06) & JP 59 193140 A (TOYOTA JIDOSHA KK), 1. November 1984 (1984-11-01)

## Beschreibung

Die Erfindung betrifft ein Verfahren zum Beschichten der Strömungskanäle eines monolithischen, zylindrisch geformten Katalysatortragkörpers mit einer Beschichtungsdispersion.

Monolithische Katalysatortragkörper werden im großen Maßstab für die Herstellung von Autoabgaskatalysatoren verwendet. Sie besitzen eine zylindrische Form und werden von einer Vielzahl von Strömungskanälen für die Abgase der Verbrennungskraftmaschinen durchzogen, die parallel zur Zylinderachse liegen. Solche Tragkörper werden häufig auch als Wabenkörper bezeichnet.

Die Querschnittsform der Katalysatortragkörper hängt von den Einbauerfordernissen am Kraftfahrzeug ab. Weit verbreitet sind Katalysatorkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Katalysatorkörper angeordnet. Je nach Anwendungsfall variiert die Kanal- beziehungsweise Zelldichte der Strömungskanäle zwischen 10 und 120 cm⁻². Katalysatorkörper mit Zelldichten bis zu 250 cm⁻² und mehr sind in der Entwicklung.

Für die Reinigung der Autoabgase werden Katalysatortragkörper eingesetzt, die durch Extrusion keramischer Massen gewonnen werden. Alternativ dazu stehen Katalysatortragkörper aus gewellten und gewickelten Metallfolien zur Verfügung. Für die Abgasreinigung von Personenkraftwagen werden heute noch überwiegend Katalysatortragkörper mit Zelldichten von 62 cm⁻² eingesetzt. Die Querschnittsabmessungen der Stromungskanäle betragen in diesem Fall 1,27 x 1,27 mm². Die Wandstärken solcher Katalysatorkörper liegen zwischen 0,1 und 0,2 mm.

Zur Umsetzung der in Autoabgasen enthaltenen Schadstoffe wie Kohlenmonoxid, Kohlenwasserstoffe und Stickoxide in unschädliche Verbindungen werden zumeist feinstverteilte Platingruppenmetalle eingesetzt, die durch Verbindungen von Unedelmetallen in ihrer katalytischen Wirkung verändert sein können. Diese katalytisch aktiven Komponenten müssen auf den Katalysatorkörpern abgeschieden werden. Allerdings ist es nicht möglich, die geforderte feinste Verteilung der katalytisch aktiven Komponenten durch Abscheidung dieser Komponenten auf den geometrischen Oberflächen der Katalysatorkörper zu gewährleisten. Dies gilt in gleicher Weise für die unporösen metallischen wie auch für die porösen keramischen Katalysatorkörper. Eine ausreichend große Oberfläche für die katalytisch aktiven Komponenten kann nur durch Aufbringen einer Trägerschicht aus feinteiligen, hochoberflächigen Materialien zur Verfügung gestellt werden.

Gegenstand der vorliegenden Erfindung ist ein Verfahren zur Aufbringung einer solchen Trägerschicht auf die Innenflächen der Strömungskanäle von wabenförmigen Katalysatorkörpern. Im Rahmen dieser Erfindung wird die Trägerschicht für die katalytisch aktiven Komponenten als Dispersionsbeschichtung bezeichnet. Die Dispersionsbeschichtung besteht aus den feinteiligen, hochoberflächigen Materialien und wird unter Verwendung einer sogenannten Beschichtungsdispersion hergestellt. Bei der Beschichtungsdispersion handelt es sich um eine Aufschlämmung der feinteiligen Materialien zumeist in Wasser.

Es sind aus dem Stand der Technik verschiedene Verfahren zur Abscheidung der Beschichtungsdispersion auf den Katalysatorkörpern bekannt. Nach dem Beschichtungsvorgang werden die Katalysatorkörper getrocknet und anschließend zur Verfestigung der Dispersionsbeschichtung kalziniert. Anschließend werden die katalytisch aktiven Komponenten in die Dispersionsbeschichtung durch Imprägnieren mit zumeist wäßrigen Lösungen von Vorläuferverbindungen der katalytisch aktiven Komponenten eingebracht. Alternativ hierzu können die katalytisch aktiven Komponenten auch schon der Beschichtungsdispersion selbst zugefügt werden. Ein nachträgliches Imprägnieren der fertiggestellten Dispersionsbeschichtung mit den katalytisch aktiven Komponenten entfällt in diesem Fall.

Die GB 1 515 733 beschreibt ein Beschichtungsverfahren für keramische Katalysatorkörper. Die porösen Katalysatorkörper werden stehend, das heißt mit senkrecht ausgerichteten Strömungskanälen, in eine druckfeste Beschichtungskammer eingesetzt und durch Anlegen eines Unterdruckes von 0,84 bar (25 Zoll Quecksilbersäule) entgast. Anschließend wird die Beschichtungsdispersion über die obere Stirnfläche des Katalysatorkörpers in die Beschichtungskammer eingefüllt und durch Anlegen eines Überdruckes in die Poren des Katalysatorkörpers eingepresst. Nach Zurücknahme des Überdruckes und Öffnen eines Ablaßventiles im Boden der Beschichtungskammer fließt überschüssige Beschichtungsdispersion aus den Strömungskanälen des Katalysatorkörpers. Abschließend werden eventuell durch Beschichtungsdispersion blockierte Strömungskanäle mit Preßluft von oben nach unten freigeblasen. Die Taktzeit dieses Beschichtungsverfahrens beträgt weniger als 1 1/2 bis 2 Minuten.

Die US 4,208,454 beschreibt ebenfalls ein Verfahren zur Beschichtung von porösen keramischen Katalysatorkörpern. Die zu beschichtenden Katalysatorkörper werden mit ihrer unteren Stirnfläche auf die Öffnung eines Abscheidegefäßes gestellt, in welchem der Druck mittels eines großvolumigen Gebläses um 5 bis 16 Zoll Wassersäule (1,245-3,985 kPa) gegenüber dem Atmosphärendruck vermindert ist. Dieser Unterdruck wird während der gesamten Beschichtungsdauer konstant gehalten.

Ein vorgegebenes Volumen der Beschichtungsdispersion wird über die obere Stirnfläche des Katalysatorkörpers verteilt und gleichmäßig durch die Strömungskanäle hindurch in das Abscheidegefäß hineingezogen. Der Absaugvorgang wird für wenigstens etwa 30 s aufrechterhalten. Nach den ersten 5 s ist die gesamte Beschichtungsmenge durch den Katalysatorkörper hindurchgezogen. Während der restlichen Zeit sorgt die durch die Strömungskanäle hindurchströmende Luft dafür, daß eventuell durch Beschichtungsdispersion blockierte Strömungskanäle geöffnet werden. Die auf dem Katalysatorkörper verbleibende Beschichtungsmenge kann durch die Dauer der gesamte Absaugzeit und durch die Höhe des Unterdruckes beeinflußt werden. Die axiale Gleichmäßigkeit der Beschichtung auf dem Katalysatorkörper kann dadurch verbessert werden, daß nach etwa der Hälfte der Absaugzeit der Katalysatorkörper umgedreht und in entgegengesetzter Richtung abgesaugt wird. Mit diesem Verfahren lassen sich Beschichtungsdispersionen mit 30 bis 45 % Feststoffgehalt sowie einer Viskosität zwischen 60 und 3000 cps verarbeiten. Der bevorzugte Feststoffgehalt liegt bei 37 Gew.-% und die bevorzugte Viskosität bei 400 cps. Die Reproduzierbarkeit der Beschichtungsmenge wird bei diesem Verfahren mit ± 5% angegeben.

Die EP 0 157 651 B1 beschreibt ebenfalls ein Verfahren zur Beschichtung keramischer Katalysatorkörper mit einer vorgegebenen Menge einer Beschichtungsdispersion. Hierzu wird die vorgewogene Menge der Beschichtungsdispersion in ein offenes, breites Gefäß eingefüllt und der Katalysatorkörper mit seiner unteren Stirnfläche in die Dispersion eingetaucht. Anschließend wird die Dispersion durch Anlegen eines leichten Unterdruckes an die obere Stirnfläche in die Strömungskanäle des Katalysatorkörpers hineingesaugt. Zur Verbesserung der axialen Gleichmäßigkeit der Beschichtung wird auch hier empfohlen, den Beschichtungsprozeß in zwei Schritten ablaufen zu lassen.

Im ersten Schritt werden nur etwa 50 bis 85 % der gesamten Beschichtungsmenge in das Gefäß eingefüllt und in den Katalysatorkörper eingesaugt. Danach wird der Katalysatorkörper gedreht und die restliche Beschichtungsmenge in entgegengesetzter Richtung in den Katalysatorkörper gesaugt. Dieses Beschichtungsverfahren benötigt keinen separaten Schritt für die Öffnung eventuell verschlossener Strömungskanäle. Die Taktzeit dieses Verfahrens beträgt etwas weniger als 1 Minute. Mit diesem Verfahren können Beschichtungsdispersionen verarbeitet werden, die einen Feststoffgehalt zwischen 35 und 52 % aufweisen sowie Viskositäten zwischen 15 und 300 cps besitzen.

Die US 5,182,140 beschreibt ein Verfahren zur Beschichtung von keramischen und metallischen Katalysatorkörpern. Hierbei wird die Beschichtungsdispersion von unten in die senkrecht aufgestellten Katalysatorkörper eingepumpt, bis die Dispersion vollständig eine Höhe oberhalb der oberen Stirnfläche des Katalysatorkörpers erreicht. Anschließend wird überschüssige Beschichtungsdispersion durch Anwendung von Preßluft auf die obere Stirnfläche des Katalysatorkörpers aus dem Körper entfernt. Dabei werden gleichzeitig eventuell noch verschlossene Strömungskanäle freigeblasen. Gemäß Beispiel 1 dieser Patentschrift wird ein Füllstand der Beschichtungsdispersion oberhalb der oberen Stirnfläche des Katalysatorkörpers von 2 cm eingestellt. Die Preßluft zum Austreiben der überschüssigen Beschichtungsdispersion aus den Strömungskanälen wird in zwei Druckstufen nacheinander zugeführt. Während der ersten 2 Sekunden nach dem Befüllen des Katalysatorkörpers wird die Beschichtungsdispersion mit einer Preßluft von 3,7 bar beaufschlagt. Dieser hohe Druck reicht aus, um während der zur Verfügung stehenden 2 s die überschüssige Beschichtungsdispersion vollständig aus den Strömungskanälen auszutreiben. Danach wird der Preßluftdruck auf 0,37 bar vermindert und der Katalysatorkörper zweimal mit diesem Druck jeweils 0,5 s lang beaufschlagt. Mit diesem Verfahren können Beschichtungsdispersionen verarbeitet werden, die eine spezifische Dichte zwischen 1 und 2 g/ml aufweisen und eine Viskosität zwischen 100 und 500 cps besitzen.

Die DE 40 40 150 C2 beschreibt ebenfalls ein Verfahren zur gleichmäßigen Beschichtung eines Wabenkörpers aus Keramik oder Metall. Hierzu wird der Wabenkörper in eine Tauchkammer eingebracht und von unten mit der Beschichtungsdispersion gefüllt. Danach wird der Wabenkörper wieder durch Ausblasen oder Absaugen entleert. Der Wabenkörper wird dann aus der Tauchkammer entnommen und in einer separaten Anlage zur Vermeidung von blockierten Strömungskanälen durch Absaugen oder Ausblasen von überschüssiger Dispersion befreit. Mit diesem Verfahren können Beschichtungsdispersionen mit Feststoffgehalten zwischen 48 und 64 Gew.-% sowie Viskositäten zwischen 50 und mehr als 100 cps verarbeitet werden.

Die beschriebenen Verfahren eignen sich sowohl für die Beschichtung von keramischen als auch von metallischen Tragkörpern. Im Falle von metallischen Tragkörpern aus übereinandergestapelten Metallbändern ist es aus der DE 4233404 C2, der WO 92/14549 und der EP 0775808 A1 bekannt, alternativ zur Beschichtung der fertigen Tragkörper die Metallbänder vor dem Zusammenbau der Tragkörper in einer Bandbeschichtungsanlage zu beschichten.

Die Abgasreinigung von Verbrennungskraftmaschinen unterliegt ständig steigenden gesetzlichen Anforderungen bezüglich der Schadstoffumsetzung. Um diesen Anforderungen nachkommen zu können, werden Katalysatortragkörper mit immer höherer Zelldichte entwickelt. Die überwiegende Zahl der produzierten Katalysatortragkörper weist jedoch noch immer Zelldichten von nur 62 cm⁻² auf. Ein geringer Teil von Tragkörpern wird schon mit Zelldichten von 124 cm gefertigt. Es handelt sich dabei hauptsächlich um Tragkörper aus Metallbändern.

In der Entwicklung befinden sich Tragkörper mit Zelldichten von mehr als 186 cm⁻². Darüber hinaus wird versucht, die Schadstoffumsetzung durch sogenannte Startkatalysatoren zu verbessern, die motornah vor dem eigentlichen Hauptkatalysator in die Abgasleitung eingebaut werden. Hierbei handelt es sich um kleinvolumige Katalysatoren, die auch hohe Zelldichten aufweisen können. Diese Katalysatoren lassen sich auch vorteilhaft für die Abgasreinigung von Motorrädern einsetzen.

Die beschriebenen Beschichtungsverfahren für Katalysatortragkörper sind nur unzureichend für die Beschichtung kleinvolumiger Katalysatortragkörper geeignet. Dies gilt insbesondere für kleinvolumige Katalysatorkörper mit hoher Zelldichte. Die mit den bekannten Verfahren erzielbaren Taktraten sind für eine wirtschaftliche Beschichtung zu gering. Mit Ihnen können nur große Tragkörper mit niedrigen Zelldichten gut beschichtet werden. Die Überwachung der Viskositäten der Beschichtungsdispersion erfordert zum Teil einen hohen Aufwand, da der Beschichtungsdispersion durch einen langen Kontakt mit den für das Freisaugen der Strömungskanäle verwendeten Luftströmen ein erheblicher Feuchtigkeitsanteil entzogen wird, der ständig ergänzt werden muß, um die Reproduzierbarkeit der Beschichtung gewährleisten zu können.

Die Herstellung von kleinvolumigen Katalysatoren aus zuvor beschichteten Metallbändern führt dagegen zu Verlusten an aktivem Beschichtungsmaterial durch den Verschluß von Strömungskanälen beim Zusammenfügen der Katalysatoren. Diese Verluste können im ungünstigen Fall bis zu 10% betragen. Darüber hinaus ist es ein Charakteristikum dieser Vorgehensweise, daß an den Berührungsstellen benachbarter Metallbänder spitzwinklige Räume gebildet werden, die sich ungünstig auf den Zugang der Abgase zu der katalytischen Beschichtung auswirken und damit die katalytische Aktivität des Katalysators herabsetzen.

Es ist daher Aufgabe der vorliegenden Erfindung, ein neues Beschichtungsverfahren für keramische und metallische Katalysatorkörper in Wabenform zur Verfügung zu stellen, welches sich durch Taktzeiten von weniger als 10 Sekunden auszeichnet und es gestattet, Tragkörper mit einer Zelldichte von mehr als 180 cm⁻² reproduzierbar zu beschichten.

Diese Aufgabe wird gelöst durch ein Verfahren zum Beschichten der Strömungskanäle eines monolithischen, zylindrisch geformten Katalysatortragkörpers mit einer Beschichtungsdispersion, wobei der Tragkörper zwei Stirnflächen aufweist, die durch parallel zur Zylinderachse angeordnete Strömungskanäle miteinander verbunden sind. Die Beschichtung erfolgt durch vertikales Ausrichten der Zylinderachse des Tragkörpers, Aufgeben einer vorgegebenen Menge der Beschichtungsdispersion aus einem Vorratsbehälter auf die obere Stirnfläche des Tragkörpers und Hindurchsaugen der Dispersion durch die Strömungskanäle, Entfernen überschüssiger Beschichtungsdispersion aus den Strömungskanälen durch Freisaugen der Strömungskanäle, Rückführen der überschüssigen Dispersion in den Vorratsbehälter und Fixieren der Dispersionsbeschichtung durch Calcinieren.

Das Verfahren ist dadurch gekennzeichnet, daß die Beschichtungsdispersion mit einer Strömungsgeschwindigkeit von 0,1 bis 1 m/s durch die Strömungskanäle gesaugt wird und daß nach Abschluß des Hindurchsaugens überschüssige Beschichtungsdispersion aus den Strömungskanälen durch Anlegen eines Saugimpulses von unten entfernt wird, wobei die Absaugluft mit einer Strömungsgeschwindigkeit zwischen 40 und 1 m/s durch die Strömungskanäle gesaugt und die mit dem Luftstrom ausgetragene überschüssige Beschichtungsdispersion innerhalb einer Zeit von weniger als 100 ms nach dem Austreten aus dem Katalysatortragkörper vom Luftstrom abgetrennt wird.

Erfindungsgemäß wird also die Beschichtung der Strömungskanäle in zwei Stufen vorgenommen. In der ersten Stufe wird eine vorgegebene Menge der Beschichtungsdispersion auf die obere Stirnfläche des Katalysatortragkörpers aufgegeben und durch Anlegen eines Unterdruckes an die untere Stirnfläche durch die Strömungskanäle mit einer Strömungsgeschwindigkeit von 0,1 bis 1 m/s hindurchgesaugt. Bevorzugt wird die vorgegebene Menge der Beschichtungsdispersion so bemessen, daß sie dem 0,5 bis 2-fachen des freien Volumens der Strömungskanäle entspricht. Die Strömungsgeschwindigkeit wird vorteilhafterweise so gewählt, daß der Vorgang des Hindurchsaugens nach weniger als einer Sekunde abgeschlossen ist.

An diese erste Stufe schließt sich unmittelbar die zweite Stufe des Verfahrens an, in der die Strömungskanäle durch Anlegen eines Saugimpulses von überschüssiger Beschichtungsdispersion befreit werden. Unter einem Saugimpuls wird hier ein Vorgang verstanden, bei dem zunächst eine sehr große Luftmenge durch die Strömungskanäle gefördert wird. Im Verlauf des Saugimpulses nimmt die Fördermenge jedoch kontinuierlich ab.

Ein solcher Saugimpuls kann dadurch verwirklicht werden, daß die untere Stirnfläche des Tragkörpers mit einem großen Unterdruckbehälter verbunden wird, was dazu führt, daß die anfängliche Geschwindigkeit der Absaugluft in den Strömungskanälen sehr hoch ist und im Verlauf des Absaugens kontinuierlich vermindert wird, da sich der Unterdruck im Unterdruckbehälter durch die geförderte Absaugluft verringert. Erfindungsgemäß sollte die anfängliche Geschwindigkeit der Absaugluft zwischen 5 und 40 m/s liegen. Zum Ende des Absaugvorganges vermindert sich die Strömungsgeschwindigkeit bis minimal auf etwa 1 m/s.

Während der ersten Verfahrensstufe wird zum Hindurchsaugen der Beschichtungsdispersion durch die Strömungskanäle die untere Stirnfläche des Katalysatortragkörpers ebenfalls mit dem Unterdruckbehälter verbunden. Durch geeignete Drosselung muß jedoch dafür gesorgt werden, daß die erfindungsgemäßen Strömungsgeschwindigkeiten der Beschichtungsdispersion in den Strömungskanälen eingehalten werden.

Ein wesentlicher Aspekt der Erfindung ist die frühzeitige Trennung der mit der Absaugluft aus den Strömungskanälen ausgetragenen überschüssigen Beschichtungsdispersion von der Absaugluft. Dadurch soll der Flüssigkeitsentzug der Beschichtungsdispersion durch die Absaugluft vermindert und die Rückführung der überschüssigen Beschichtungsdispersion in den Vorratsbehälter vereinfacht werden. Ohne diese Maßnahme würde sich der Feststoffgehalt der Beschichtungsdispersion im Vorratsbehälter beständig erhöhen und damit eine reproduzierbare Beschichtung der Katalysatortragkörper erschweren.

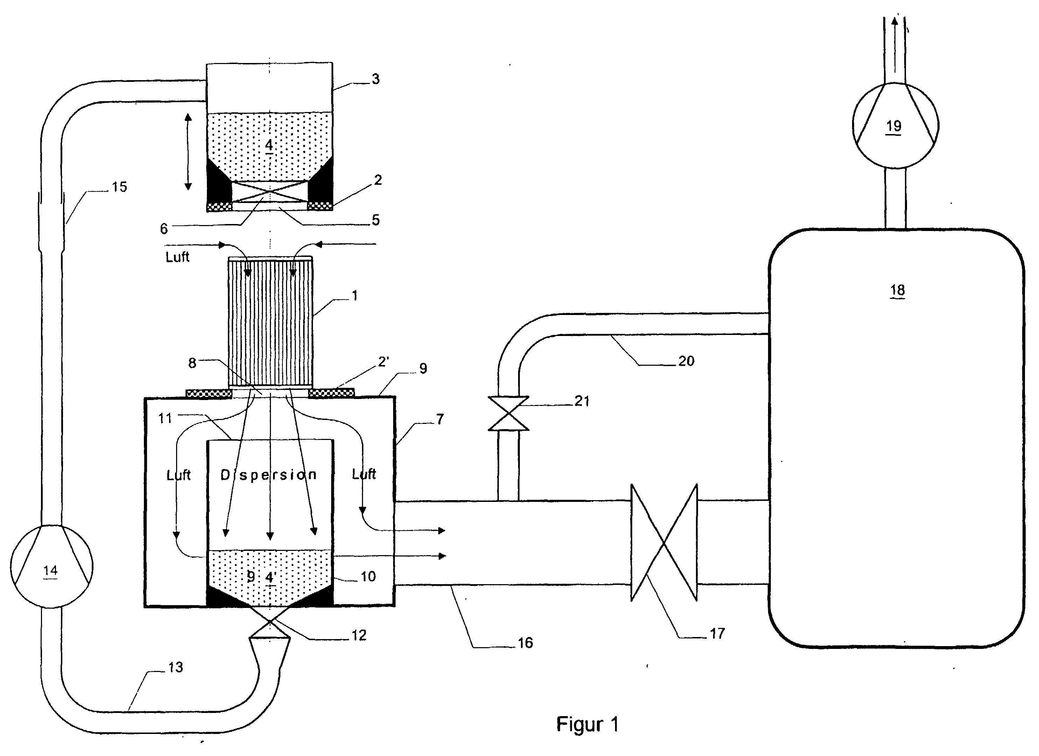

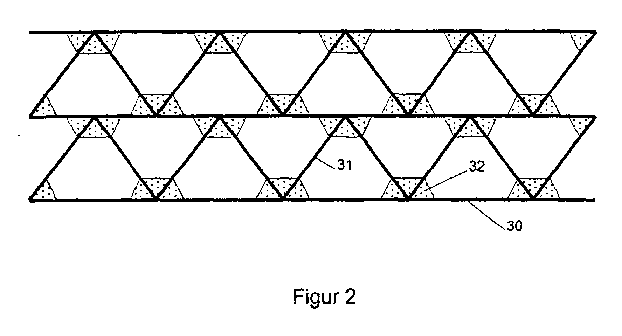

Zur weiteren Erläuterung der Erfindung dienen die Figuren 1 und 2. Es zeigen:
- **Figur 1:**: Vorrichtung zur Durchführung des Verfahrens
- **Figur 2:**: Füllen der spitzwinkligen Räume eines metallischen Katalysatorkörpers durch eine Vorbeschichtung

Zur Durchführung des erfindungsgemäßen Verfahrens ist die in Figur 1 schematisch gezeigte Vorrichtung geeignet. (1) bezeichnet den zu beschichtenden Tragkörper. Oberhalb des Tragkörpers ist der Vorratsbehälter (3) mit der Beschichtungsdispersion (4) angeordnet. Der Vorratsbehälter besitzt eine untere Öffnung (5) zum Füllen der Strömungskanäle des Tragkörpers mit der Beschichtungsdispersion. Der Querschnitt der Öffnung (5) stimmt mit der Querschnittsform des zu beschichtenden Tragkörpers überein, ist jedoch geringfügig kleiner als der Querschnitt des Katalysatortragkörpers, um eine Auflage des Randes des Tragkörpers auf der Dichtung 2 zu ermöglichen und damit das Austreten von Beschichtungsdispersion zwischen Vorratsbehälter und Tragkörper während des Füllvorganges zu verhindern. Zum Aufgeben der vorgegebenen Menge der Beschichtungsdispersion auf die obere Stirnfläche des Tragkörpers ist der Vorratsbehälter mit einem Füllventil (6) versehen.

Der Tragkörper sitzt mit seiner unteren Stirnfläche auf dem Rand der Öffnung (8) in der Deckplatte (9) der Absaugkammer (7). Die Öffnung (8) hat ebenfalls dieselbe Querschnittsform wie der Tragkörper, ist jedoch geringfügig kleiner als der Querschnitt des Tragkörpers, um mit Hilfe der Dichtung (2') den äußeren Rand des Tragkörpers abzudichten. In der Absaugkammer (7) ist ein Abscheidegefäß (10) unter der Öffnung (8) zum Auffangen der überschüssigen Beschichtungsdispersion angeordnet. Der obere Rand des Abscheidegefäßes ist mit (11) bezeichnet. Das Abscheidegefäß (10) ist am Boden mit einem Entleerungsventil (12) ausgestattet. Durch Öffnen des Ventils kann die sich im Abscheidegefäß ansammelnde überschüssige Beschichtungsdispersion (4') von Zeit zu Zeit über Rohrleitung (13) mittels der Pumpe (14) in den Vorratsbehälter (3) zurückgepumpt werden.

Die Absaugkammer (7) ist über eine Leitung (16) mit großem Querschnitt mit einem Unterdruckbehälter (18) verbunden. Die Verbindung kann mit dem Absaugventil (17) freigegeben oder unterbrochen werden. Darüber hinaus ist die Absaugkammer über eine weitere Leitung (20) und Drosselventil (21) mit dem Unterdruckbehälter (18) verbunden. Der Unterdruckbehälter (18) wird durch das Gebläse (19) bis auf einen Druck zwischen 100 und 850 mbar Absolutdruck evakuiert. Das Volumen des Unterdruckbehälters beträgt etwa das 500 bis 1000-fache des Volumens des zu beschichtenden Katalysatorträgers.

Der Vorratsbehälter (3) in Figur 1 kann in vertikaler Richtung verschoben werden. Zum Befüllen der Strömungskanäle mit der Beschichtungsdispersion wird der Vorratsbehälter mit seiner Dichtung 2 auf den oberen Rand des Katalysatortragkörpers abgesenkt. Dadurch wird zwischen beiden eine dichte Verbindung hergestellt. Nach dem Ende des Füllvorganges wird das Füllventil (6) wieder geschlossen und der Vorratsbehälter angehoben. Um diese Bewegung zu ermöglichen ist die Rückführungsleitung (13) in Figur 1 mit einer Verschiebehülse (15) versehen. Alternativ kann zu diesem Zweck auch eine flexible Schlauchverbindung vorgesehen werden.

Bei den Dichtungen (2) und (2') kann es sich zum Beispiel um aufblasbare Gummimanschetten handeln, in die der Tragkörper eingesetzt wird. Durch Aufblasen der Gummimanschetten wird eine dichte Verbindung zwischen den Manschetten und der Mantelfläche des Tragkörpers hergestellt.

In Figur 1 ist eine alternative Ausführung der Dichtungen in Form von Flachdichtungen gezeigt. Diese Ausführung eignet sich besonders für Tragkörper, deren Mantelfläche in Form eines erhöhten Randes über die eigentliche Stirnfläche des Katalysatorkörpers hinausragt. In diesem Fall kann die Abdichtung einfach dadurch hergestellt werden, daß die Ränder des Katalysatorkörpers auf die Flachdichtungen gepreßt werden.

Das erfindungsgemäße Beschichtungsverfahren ist besonders für kleinvolumige Katalysatoren mit hohen Zelldichten oberhalb 180 cm⁻² und mit Längen von bis zu 10 cm und Durchmessern von weniger als 10 cm geeignet. Der Beschichtungsvorgang läuft in folgenden Schritten ab:
1. Schließen des Absaugventils (17),
2. Stellen des Tragkörpers auf die Dichtung (2') der Absaugkammer und Absenken des Vorratsbehälters mit seiner Dichtung (2) auf den oberen Rand des Tragkörpers,
3. Öffnen des Füllventils (6) für eine Zeitdauer von weniger als einer Sekunde und Überfluten der oberen Stirnfläche des Tragkörpers (1) mit einer vorgegebenen Menge der Beschichtungsdispersion (im folgenden auch als Füllmenge bezeichnet),
4. Durchsaugen der Beschichtungsdispersion durch die Strömungskanäle des Tragkörpers während der Öffnungszeit des Füllventils mit einer Strömungsgeschwindigkeit zwischen 0,1 und 1 m/s, wobei der hierfür notwendige Unterdruck an der unteren Stirnfläche des Tragkörpers über das Drosselventil (21) hergestellt wird,
5. Schließen des Füllventils (6) und Trennen der Verbindung zwischen Tragkörper und Vorratsbehälter, um einen freien Luftzutritt zu der oberen Stirnfläche des Tragkörpers zu ermöglichen,
6. Anlegen eines Saugimpulses an die untere Stirnfläche des Tragkörpers durch Öffnen des Absaugventils (17) zum Entfernen überschüssiger Beschichtungsdispersion aus den Strömungskanälen durch Freisaugen mit einer Luftmenge, die dem 100 bis 1000-fachen des freien Volumens der Strömungskanäle entspricht und mit einer abnehmenden Strömungsgeschwindigkeit zwischen 40 und 1 m/s,
7. Schließen des Absaugventils und Entnehmen des beschichteten Tragkörpers, Trocknen und Calcinieren der Beschichtung in einem Trocknungsofen,
8. periodisches Öffnen des Entleerungsventils (12) zur Rückführung der sich im Abscheidegefäß ansammelnden Beschichtungsdispersion (4') mittels der Pumpe (14) in den Vorratsbehälter (3).

Erfindungsgemäß wird also der zu beschichtende Tragkörper zunächst durch Hineinsaugen der Beschichtungsdispersion in die Strömungskanäle gefüllt. Die hierbei zur Anwendung kommende Menge der Beschichtungsdispersion (Füllmenge) liegt vorteilhafterweise zwischen dem 0,5-fachen und dem doppelten des freien Volumens der Strömungskanäle. Das Durchsaugen erfolgt mit einer Strömungsgeschwindigkeit der Dispersion in den Strömungskanälen zwischen 0,1 und 1 m/s. Die erforderliche Öffnungszeit des Füllventils läßt sich leicht aus der Füllmenge, der Länge des Katalysatorkörpers und der Strömungsgeschwindigkeit berechnen. Sie liegt unterhalb einer Sekunde.

Die notwendige Strömungsgeschwindigkeit läßt sich durch den Druck im Unterdruckbehälter und die Drosselung des Drosselventils (21) einstellen. Das Drosselventil bleibt vorteilhafterweise während des gesamten Beschichtungsvorganges geöffnet.

Nach dem Schließen des Füllventils wird die Verbindung zwischen Vorratsbehälter und Katalysatorkörper zum Beispiel durch Anheben des Vorratsbehälters gelöst und damit ein freier Zutritt von Luft zur oberen Stirnfläche des Katalysatorkörpers geschaffen. Gleichzeitig wird das Absaugventil (17) geöffnet, das eine Verbindung mit großem Querschnitt zum Unterdruckbehälter schafft. Dadurch wird ein Saugimpuls an die untere Stirnfläche des Katalysatorkörpers gelegt, der dafür sorgt, daß die überschüssige Beschichtungsdispersion aus den Strömungskanälen entfernt und eventuell blockierte Strömungskanäle freigesaugt werden. Die Stärke des Saugimpulses hängt vom Druck im Unterdruckbehälter ab. Der Druck sollte maximal 850 mbar absolut betragen, um einen ausreichenden Saugimpuls mit anfänglichen Strömungsgeschwindigkeiten der Luft in den Strömungskanälen von 5 bis 40 m/s zu erzeugen.

Gute Beschichtungsergebnisse werden erfahrungsgemäß mit einem Saugimpuls erhalten, bei dem das 100 bis 1000-fache des freien Volumens der Strömungskanäle innerhalb einer Zeit von in der Regel deutlich weniger als 5 Sekunden durch den Katalysatorkörper gesaugt wird. Während dieser Zeit sinkt die Strömungsgeschwindigkeit wegen des ansteigenden Druckes im Unterdruckbehälter von ihrem anfänglichen Maximalwert bis auf minimal etwa 1 bis 5 m/s ab.

Nach dem Absaugen der überschüssigen Beschichtungsdispersion kann der Katalysatorkörper aus der Beschichtungsvorrichtung entnommen und in einem Ofen getrocknet und calciniert werden.

Der gesamte Beschichtungsvorgang vom Einsetzen des Katalysatorkörpers in die Beschichtungsvorrichtung bis zu seiner Entnahme ist in weniger als 10 Sekunden abgeschlossen.

Ein wesentliches Merkmal des erfindungsgemäßen Verfahrens ist neben dem Anlegen des Saugimpulses die frühzeitige Trennung der überschüssigen Beschichtungsdispersion vom Luftstrom zum Freisaugen des Katalysatorkörpers. Erfindungsgemäß sollte die Zeit zwischen dem Austreten der Beschichtungsdispersion aus der unteren Stirnfläche des Katalysatorkörpers und der Abtrennung aus dem Luftstrom nicht mehr als 100, bevorzugt weniger als 10 ms, betragen. Dies wird bei der beschriebenen Beschichtungsvorrichtung gemäß Figur 1 dadurch erreicht, daß in der Absaugkammer ein Abscheidegefäß (10) angeordnet ist, welches mit seinem oberen Rand (11) bis auf weniger als 5 cm an die untere Stirnfläche des Katalysatorkörpers herangeführt ist.

Der Saugimpuls wird also im wesentlichen über den Ringspalt zwischen dem oberen Rand (11) des Abscheidegefäßes und der Deckplatte (9) der Absaugkammer an die untere Stirnfläche des Katalysatorkörpers gelegt. Nach dem Durchtritt durch den Katalysatorkörper erfährt der Luftstrom eine Umlenkung um etwa 90°. Die abgesaugten Tropfen der Beschichtungsdispersion folgen aufgrund ihrer Trägheit nicht dieser Umlenkung, sondern werden am Boden des Abscheidegefäßes gesammelt. Die Flüssigkeitsoberfläche der im Abscheidegefäß aufgefangenen Dispersion steht durch diese Konstruktion von Absaugkammer und Abscheidegefäß nicht mehr mit dem Luftstrom in Kontakt.

Der Luftstrom kann daher die überschüssige Beschichtungsdispersion nicht durch Feuchtigkeitsentzug aufkonzentrieren, wie es zum Beispiel bei der Anordnung nach US 4,208,454 der Fall ist. Dort ist die Flüssigkeitsoberfläche der überschüssigen Beschichtungsdispersion während der gesamten Absaugzeit von 30 Sekunden dem Luftstrom ausgesetzt, was zu einem starken Flüssigkeitsverlust und damit zur Notwendigkeit der Aufbereitung der überschüssigen Beschichtungsdispersion führt, bevor sie dem Vorratsbehälter wieder zugeführt werden kann.

Diese Aufbereitung kann nach dem erfindungsgemäßen Verfahren entfallen, ohne daß sich dies negativ auf die Reproduzierbarkeit der Beschichtungen auswirkt.

Durch eine Vorbeschichtung von Tragkörpern aus Metallbändern mit einer niedrigviskosen, edelmetallfreien Dispersion oder Lösung, die eine hohe Oberflächenspannung aufweist und nachfolgender Trocknung, lassen sich die spitzwinkligen Räume an den Berührungsstellen der Metallbänder, wie in Figur 2 gezeigt, auffüllen. Dadurch lassen sich bei einer anschließenden Beschichtung mit einer Dispersion, bei der das katalytisch aktive Edelmetall auf den Feststoffen der Dispersion fixiert ist, die Diffusionswege für die Schadstoffumsetzung verkürzen. Damit kann also sowohl teures Edelmetall eingespart als auch die katalytische Aktivität des Katalysators erhöht werden.

Figur 2 zeigt schematisch einen Ausschnitt aus einem Katalysatortragkörper aus übereinandergeschichteten abwechselnd glatten (30) und gewellten (31) Metallbändern. Die spitzwinkligen Zwickel an den Berührungsstellen der gewellten und glatten Metallbänder können durch die Vorbeschichtung mit einer edelmetallfreien Dispersion (32) aufgefüllt werden.

## Patentansprüche

1. Verfahren zum Beschichten der Strömungskanäle eines monolithischen, zylindrisch geformten Katalysatortragkörpers mit einer Beschichtungsdispersion, wobei der Tragkörper zwei Stirnflächen aufweist, die durch parallel zur Zylinderachse angeordnete Strömungskanäle miteinander verbunden sind, durch vertikales Ausrichten der Zylinderachse, Aufgeben einer vorgegebenen Menge der Beschichtungsdispersion aus einem Vorratsbehälter auf die obere Stirnfläche des Tragkörpers und Hindurchsaugen der Dispersion durch die Strömungskanäle, Entfernen überschüssiger Beschichtungsdispersion aus den Strömungskanälen durch Freisaugen der Strömungskanäle, Rückführen der überschüssigen Dispersion in den Vorratsbehälter und Fixieren der Dispersionsbeschichtung durch Calcinieren,
**dadurch gekennzeichnet,**
**daß** die Beschichtungsdispersion mit einer Strömungsgeschwindigkeit von 0,1 bis 1 m/s durch die Strömungskanäle gesaugt wird und daß nach Abschluß des Hindurchsaugens überschüssige Beschichtungsdispersion aus den Strömungskanälen durch Anlegen eines Saugimpulses von unten entfernt wird, wobei die Absaugluft mit einer Strömungsgeschwindigkeit zwischen 40 und 1 m/s durch die Strömungskanäle gesaugt und die mit dem Luftstrom ausgetragene überschüssige Beschichtungsdispersion innerhalb einer Zeit von weniger als 100 ms nach dem Austreten aus dem Katalysatortragkörper vom Luftstrom abgetrennt wird.

2. Verfahren nach Anspruch 1,
**dadurch gekennzeichnet,**
**daß** die vorgegebene Menge der Beschichtungsdispersion auf das 0,5 bis 2-fache des freien Volumens der Strömungskanäle bemessen wird.

3. Verfahren nach Anspruch 2,
**dadurch gekennzeichnet,**
**daß** die Luftmenge zum Freisaugen der Strömungskanäle dem 100 bis 1000-fachen des freien Volumens der Strömungskanäle entspricht.

4. Verfahren nach Anspruch 1,
**dadurch gekennzeichnet,**
**daß** eine Beschichtungsdispersion verwendet wird, die schon katalytisch aktive Edelmetalle enthält.

5. Verfahren nach Anspruch 1,
**dadurch gekennzeichnet,**
**daß** vor dem Aufbringen der edelmetallhaltigen Beschichtungsdispersion eine Vorbeschichtung nach demselben Verfahren mit einer edelmetallfreien Beschichtungsdispersion vorgenommen wird.

## Claims

1. A process for coating the flow channels in a monolithic, cylindrically shaped catalyst support structure with a coating dispersion, wherein the support structure has two end faces which are connected to each other by flow channels arranged parallel to the axis of the cylinder, by vertically aligning the axis, placing a predetermined amount of coating dispersion from a storage container on the upper end face of the support structure and drawing the dispersion through the flow channels under suction, removing excess coating dispersion from the flow channels by emptying the flow channels under suction, returning the excess dispersion to the storage container and fixing the dispersion coating by calcination,
**characterised in that**
the coating dispersion is drawn through the flow channels under suction at a rate of flow of 0.1 to 1 m/s and that after completion of passage under suction the excess coating dispersion is removed from the flow channels by applying a suction impulse from below, wherein the suction air is drawn through the flow channels under suction at a rate of flow between 40 and 1 m/s and the excess coating dispersion discharged with the air stream is separated from the air stream within a time of less than 100 ms after discharge from the catalyst support structure.

2. A process according to Claim 1,
**characterised in that**
the predetermined amount of coating dispersion amounts to 0.5 to 2 times the free volume of the flow channels.

3. A process according to Claim 2,
**characterised in that**
the amount of air to clear the flow channels under suction corresponds to 100 to 1000 times the free volume of the flow channels.

4. A process according to Claim 1,
**characterised in that**
a coating dispersion which already contains catalytically active noble metals is used.

5. A process according to Claim 1,
**characterised in that**,
before applying the noble metal-containing coating dispersion, pre-coating with a coating dispersion which does not contain a noble metal is performed using the same process.

## Revendications

1. Procédé de revêtement de canaux de passage d'un support de catalyseur monolithique de forme cylindrique avec une dispersion de revêtement, le support ayant deux surfaces frontales reliées par des canaux de passage parallèles à l'axe du cylindre, selon lequel on aligne verticalement l'axe du cylindre, on introduit une quantité donnée de dispersion de revêtement provenant d'un réservoir au niveau de la surface frontale supérieure du support et on aspire la dispersion à travers les canaux de passage, on enlève la dispersion de revêtement en excédent des canaux de passage par aspiration de dégagement des canaux de passage, retour de la dispersion en excédent dans le réservoir d'alimentation et blocage du revêtement de dispersion par calcination,
**caractérisé en ce qu'**
on aspire la dispersion de revêtement à une vitesse d'écoulement de 0,1 à 1 m/s à travers les canaux de passage, et
à la fin de l'aspiration on enlève la dispersion de revêtement en excédent des canaux de passage par application d'une impulsion d'aspiration par en dessous, l'air d'aspiration ayant une vitesse de passage comprise entre 40 et 1 m/s à travers les canaux de passage et la dispersion de revêtement en excédent entraînée par la veine d'air étant séparée de la veine d'air en un temps inférieur à 100 ms après la sortie du support de catalyseur.

2. Procédé selon la revendication 1,
**caractérisé en ce que**
la quantité prédéterminée de dispersion de revêtement représente entre 0,5 et 2 fols le volume libre des canaux de passage.

3. Procédé selon la revendication 2,
**caractérise en ce que**
la quantité d'air nécessaire à l'aspiration de dégagement des canaux de passage représente entre 100 et 1000 fols le volume libre des canaux de passage.

4. Procédé selon la revendication 1,
**caractérisé en ce qu'**
on utilise une dispersion de revêtement qui contient déjà des métaux nobles à activité catalytique.

5. Procédé selon la revendication 1,
**caractérisé en ce qu'**
avant d'appliquer la dispersion de revêtement contenant un métal noble on effectue un pré-revêtement selon le même procédé avec une dispersion de revêtement ne contenant pas de métal noble.
